# NEUE EUROPÄISCHE PATENTSCHRIFT

(11) **EP 0 725 101 B2**
(45) Veröffentlichungstag und Bekanntmachung des Hinweises auf die Entscheidung über den Einspruch: **10.11.2004**
(45) Hinweis auf die Patenterteilung: 01.04.1998
(21) Anmeldenummer: 95114719.8
(22) Anmeldetag: 19.09.1995
(51) Int. Cl.: C08G 69/26

(54) **Transparente, farblose amorphe Polyamide und Formteile**
Transparent colourless amorphous polyamides and moulded articles
Polyamides amorphes transparents incolorés et articles moulés

(30) Priorität: 01.02.1995 CH 27095
(43) Veröffentlichungstag der Anmeldung: 07.08.1996
(73) Patentinhaber: EMS-INVENTA AG, 8001 Zürich (CH)
(72) Erfinder: Dalla Torre, Hans, Dr.Phil., CH-7013 Domat/Ems (CH)
(74) Vertreter: Hotz, Klaus, Dipl.-El.-Ing./ETH Patentanwalt

(56) Entgegenhaltungen:
- EP-A- 0 050 742
- EP-A- 0 073 557
- EP-A- 0 619 336
- CH-A- 449 257
- DE-A- 1 953 469
- DE-A- 2 030 741
- GB-A- 2 197 332
- GB-A- 2 218 105
- US-A- 3 393 210
- US-A- 4 028 476
- US-A- 4 207 411
- R. Srinivasan et al., "Polyamides Based on Cyclohexanedicarboxylic Acid", Polymer Preprints (Am. Chem. Soc., Div. Polym. Chem.) 32(1), 174-5 (1991)

## Beschreibung

Gegenstand der vorliegenden Erfindung sind transparente, farblose und amorphe Polyamide und ihre Blends oder Legierungen mit Homopolyamiden sowie die aus ihnen herstellbaren Formteile, die hohe Zähigkeit, gute Lösungsmittelbeständigkeit bei gleichzeitig hoher Steifheit und Wärmeformbeständigkeit sowie hohe Wechselbiegefestigkeiten zeigen und im Gegensatz zum Stand der Technik farblos sind.

In den Patenten ***EP-50 742, EP-69 700, US-PS 2,696,482, US-PS3,597,400, US-PS4,207,411, US-PS4,369,305*** werden amorphe Polyamide aus aliphatischen Diaminen und/oder 4,4'-Diamino-dicyclohexyl-methan (PACM) und aromatischen Dicarbonsäuren beschrieben, welche aber eine ungenügende Zähigkeit und Transparenz besitzen und nicht farblos sind.

Auch die Polyamide der Patente ***US-PS 2,512,606* und *DE-OS 20 34 541*** aus aliphatischen Dicarbonsäuren und unsubstituierten cycloaliphatischen Diaminen mit hohem trans-trans Isomerenanteil sind gegenüber kochendem Wasser und Alkoholen ungenügend spannungsrissbeständig und in manchen Fällen trüb. Die in ***DE 43 10 970*** beschriebenen Polyamide schliesslich benötigen einen besonders hohen trans-trans Isomerenanteil von 35 - 60 % des 4,4' Diaminodicyclohexyl-methans, -methans, welcher nur durch spezielle Reaktionsbedingungen mit einer aufwendigen destillativen Fraktionierung bei der Herstellung des Diamins erreicht wird. Dadurch werden diese Diamine nicht unerheblich verteuert. Sie waren kommerziell erhältich unter den Bezeichnungen PACM 50® (Du Pont, Wilmington) und Wondamin® (New Japan Chem. Corp., Osaka). Auch das Dicycan® (BASF), ein unsubstituiertes Bis (4-aminocyclohexyl)methan, besitzt ähnliche hohe trans-trans Isomerenanteile. Wenn diese Diamine auch eine zufriedenstellende Zähigkeit des Polyamides bewirken, so sind die hergestellten Formkörper trotzdem nicht genügend wechselbiegefest und wärmeformbeständig, wie es für determinierte Anwendungen wie Filtertassen im höheren Temperaturbereich erforderlich ist.

Die ***DE 15 95 354*** beschreibt ein Verfahren zur Herstellung glasklarer Polyamide aus Dicarbonsäuren und einem definierten Isomerengemisch des Bis-(aminocyclohexyl)-propans, die bis zu 80 % Caprolactam enthalten können. Dabei wird ausdrücklich auf das nachträgliche 'Trübwerden' solcher Polyamide verwiesen, die als Dicarbonsäure Dodecandisäure enthalten.

Die ***DE 37 17 928*** schützt transparente Copolyamide aus bevorzugt aromatischen Dicarbonsäuren mit den heute nicht mehr erhältlichen Isomeren des Bis-(4-amino-3-methyl-5-ethyl-cyclohexyl)-methans, die ungenügend hohe TG-Werte zeigen und die *DE 37 28 334* beansprucht schlagzähmodifizierte Blends von Copolyamiden aus aromatischen Dicarbonsäuren und einem Hexamethylendiamin-PACM-Gemisch, ebenfalls mit zu tiefen TG-Werten.

Somit bestand die Aufgabe, Polyamidformmassen zur Verfügung zu stellen, die die Nachteile des Stands der Technik überwinden lassen und Wechselbiegefestigkeiten von mindestens 1'000'000 Wechselbiegezyklen aufweisen.

Diese Aufgabe wird durch die transparenten, farblosen und amorphen Polyamide und ihre Blends oder Legierungen mit mindestens einem Homopolyamid und die aus den Polyamiden und ihren Blends und Legierungen herstellbaren Formteilen gelöst, wobei die Polyamide aufgebaut sind aus
- flüssigem 3,3'-Dimethyl-4,4'diamino-dicyclohexyl-methan mit einem Siedebereich bei 27 mbar von 204,5 bis 215,5°C nach DIN 53406, einem Erstarrungsbereich von -7,1 bis -0,6°C° nach ASTM D 1015-55, und einer Dichte bei 20°C von ca. 0,943 bis 0,945 g/cm³,
   und
- Decandisäure und Dodecandisäure oder deren Gemische, welche durch maximal 20 Mol-%, bevorzugt durch 10 Mol-% aromatische Dicarbonsäuren ersetzt sein können,
wobei die Polyamide oder deren Blends oder Legierungen wahlweise verarbeitungs- und/oder verwendungsbedingte Zusatzstoffe enthalten.

Die erfindungsgemäßen Polyamide weisen extrem hohe Wechselbiegefestigkeiten und gleichzeitig hohe Zähigkeit, hohe Steifheit, hohe Wärmeformbeständigkeit und gute Lösungsmittelbeständigkeit auf.

Überraschend wurde nun gefunden, dass insbesondere die transparenten Polyamide aus Decandisäure und Dodecandisäure und einem kommerziell verfügbaren Isomerengemisch des Typs 3,3'-Dimethyl-4,4'-diamino-dicyclohexylalkan, insbesondere des 3,3'-Dimethyl-4,4'-diamino-dicyclo-methan oder Bis-(3-Methyl-4-aminocyclohexyl)-methan mit einem Siedebereich bei 27 mbar von 204,5 bis 215,5°C nach DIN 53406, einem Erstarrungsbereich von -7,1 bis -0,6°C° nach ASTM D 1015-55, und einer Dichte bei 20°C von ca. 0,943 bis 0,945 g/cm³, nämlich dem Laromin C260® (BASF), allein oder in Blends oder Mischungen mit Homopolyamiden für sehr duktile, ausserordentlich wechselbiegefeste und trotzdem steife und wärmeformbeständige, in Alkohol, Ketonen und Heisswasser spannungsrissbeständige Formteile geeignet sind. Dabei haben die erfindungsgemässen Polyamide Tg-Werte von über 157°C.

Die erfindungsgemässen Polyamide können nach Verfahren des Stands der Technik unter Druck in Autoklaven oder in Reaktionsextrudem bei Temperaturen, bevorzugt über 260°C hergestellt werden.
Die Blends oder Legierungen mit Homopolyamiden werden nach den üblichen aus dem Stand der Technik bekannten Verfahren hergestellt.

Die dazu vorteilhaft verwendeten aliphatischen Homopolyamide sind bevorzugt ausgewählt aus der Gruppe PA69, PA610, PA612, PA912, PA1212, PA11 und PA12.

Polyamide, Blends und Legierungen können wahlweise Zusatzstoffe, bevorzugt aus der Gruppe Gleitmittel, UV- und Hitzestabilisatoren, Kettenregler, Pigmente, Farbstoffe und Verstärkungsmittel enthalten, unter letzteren sind Glas, Mineralien, Fasern und Füllstoffe bevorzugt.

Die erfindungsgemässen Formteile zeichnen sich nicht nur durch sehr hohe Wechselbiegefestigkeiten aus, die durch Wechselbiegezyklen (gemessen an 4mm dicken, trockenen Prüfstäben bei 23°C analog DIN 53442) von mindestens 1'000 000, bevorzugt von 1'500 000 und besonders bevorzugt von mindestens 1'900 000 belegt sind, sondern gleichzeitig durch Kerbschlagzähigkeiten von mindestens 10, bevorzugt 12 KJ/m² bei 23°, sowie durch gute Wärmeformbeständigkeit infolge von T_{G} Werten über 157°C bei ausgezeichneter Spannungsrissbeständigkeit in den meisten Lösungsmitteln.

Diese Kombination von wichtigen Eigenschaften wird nicht zuletzt durch hohe Molekulargewichte resp. hohe relative Lösungsviskositäten der erfindungsgemässen Polyamide, die über 1.7 (gemessen 0,5%ig in m-Kresol) liegen, ermöglicht. Sie ist im Stand der Technik bisher nicht beschrieben.

Die folgenden Beispiele sollen den Erfindungsgedanken erläutern, aber nicht einschränken.

### Beispiel 1

In einem Druckautoklaven von 130 l Fassungsvermögen wurden über eine beheizte Vorlage 13'800 g Dodecandisäure, 14'590 g Laromin C₂₆₀® [Bis-(3-methyl-4-aminocyclohexyl)-methan)], 30 g 50 %ige wässrige H₃PO₂, 150 g Benzoesäure und 10 l Wasser eingefüllt und homogen gerührt.

Nach einer Druck-, Entspannungs- und Entgasungsphase wurde das Polyamid mittels eines unter Kaltwasser geführten Stranges abgezogen und granuliert. Das getrocknete, Granulat besass folgende Eigenschaften:

| | | |
|---|---|---|
| Granulatbeurteilung | - | farblos |
| | - | brillant |
| | - | transparent |
| eta rel 0,5 %ig m-Kresol | 1,71 | |
| | | |
| Schmelzviskosität bei(270°C/122,6 N) | (Pa.s) | 986 |
| TG | (°C) | 157,1 |
| Kaltkrist.Punkt | (°C) | keine Schmelzepeaks |
| Schmelzpunkt | (°C) | keine Schmelzepeaks |
| | | |
| Endgruppen NH₂/COOH | (µ aeq/g) | 51/34 |
| | | |
| H₂O Gehalt | (Gew%) | 0,010 |

An dem zu Prüfkörpern verspritzten Granulat wurden folgende mechanische Werte gemessen:

| | | |
|---|---|---|
| Schlagzähigkeit, trocken 23°C/-40°C | (kJ/m²) | oB / oB (=ohne Bruch) |
| Kerbschlagzähigkeit, tro. 23°C/-40°C | (kJ/m²) | 12/10 |
| Reissfestigkeit, tro./kond. 23°C | (N/mm²) | 48/45 |
| Reissdehnung, tro./kond. | (%) | 79/86 |
| Zug-E-Modul, tro./kond. 23°C | (N/mm²) | 1'640/1'640 |
| | | |
| Anzahl Lastwechselzyklen analog DIN 53442, trocken, 23°C,an 4 mm dicken Stäben auf einem C. Schenk Wechselprüfapparat Typ PWO 150/1966 | | 1'960 000 |

### Spannungsrissbeständigkeit in Methanol, Aceton, Ethylacetat, Toluol: keine Rissbildung

Klein-DIN-Balken wurden 5 Monate in kochendes Wasser gelegt: die Prüfkörper blieben transparent zeigten keinerlei Deformation und besassen dann noch 80 % der ursprünglichen Kerbschlagzähigkeit.

### Beispiel 2 (Vergleichsbeispiel)

In gleicher Weise wie in Beispiel 1 wurde über ein Vorlagegefäss 13'800 g Dodecandisäure, 12'870 g eines Bis (4-amino-cyclohexyl)-methans (Dicycan®), mit hohem trans/trans Gehalt, 30 g 50 %ige wässrige unterphosphorige Säure, 150 g Benzoesäure und 10 l Wasser eingefüllt und zu einer homogenen Mischung verrührt.

Nach einer gleichen Polykondensationsreaktion wie in Beispiel 1 wurde ein transparenter, aber mit einem leichten Schleier getrübter Strang abgezogen und granuliert.

Die Granulateigenschaften waren die folgenden:

| | | |
|---|---|---|
| Granulatbeurteilung | | transparent, mit einem Trübungsschleier |
| | | |
| eta rel (0,5 %ig, m-Kresol) | | 1,68 |
| Schmelzviskosität bei 270°C/122,6 N | (Pa·s) | 1'648 |
| | | |
| TG | (°C) | 139,9 |
| Kaltkrist. Punkt | (°C) | 173,5 |
| Schmelzpunkt | (°C) | 252,7 |
| | | |
| Endgruppen, NH₂/COOH | (µ aeq/g) | 50/112 |
| H₂O Gehalt | (Gew%) | 0,015 |

Die gespritzten Prüfkörper besassen folgende mechanische Werte:

| | | |
|---|---|---|
| Schlagzähigkeit,trocken. 23°C/-40°C | (kJ/m²) | oB/oB |
| Kerbschlagzähigkeit, tro. 23°C/-40°C | (kJ/m²) | 1.6/0,7 |
| Reissfestigkeit, tro./kond. 23°C | (N/mm²) | 41 |
| Reissdehnung | (%) | 36 |
| Zug-E-Modul,tro./kond. 23°C | (N/mm²) | 1'560/1'630 |
| | | |
| Anzahl Lastwechselzyklen trocken, 23°C, (DIN 53442) an 4 mm dicken Stäben auf einem C. Schenk Wechselprüfapparat Typ PWO 150/1966 | | 328'600 |
| | | |
| Spannungsrissbeständigkeit in Methanol, Aceton, Ethylacetat, Toluol: | | beginnende Rissbildung |

Wie im Beispiel 1 wurden Klein-DIN-Balken 5 Monate in kochendes Wasser gelegt; die Balken wurden trüb, waren deformiert und besassen eine um mehr als 50 % reduzierte Kerbschlagzähigkeit im Vergleich zum Ausgangswert.

## Patentansprüche

1. Transparente, farblose, amorphe Polyamide oder deren Blends oder Legierungen mit mindestens einem Homopolyamid,
**dadurch gekennzeichnet, dass**
die Polyamide, aus
flüssigem 3,3' Dimethyl-4,4'-diaminodicyclohexylmethan
mit einem Siedebereich bei 27 mbar von 204,5 bis 215,5°C nach DIN 53406,
einem Erstarrungsbereich von -7,1 bis -0,6°C° nach ASTM D 1015-55,
und einer Dichte bei 20°C von ca. 0,943 bis 0,945 g/cm³,
und Decandisäure oder Dodecandisäure oder deren Gemisch, welche durch maximal 20 Mol-% aromatische Dicarbonsäuren ersetzt sein können, aufgebaut sind
wobei die relativen Lösungsviskositäten der Polyamide 0.5 %ig in m-Kresol über 1,7 liegen,
die Polyamide oder deren Blends oder Legierungen T_{G} -Werte über 157°C haben, wahlweise verarbeitungs- und/oder verwendungsbedingte Zusatzstoffe enthalten und aus ihnen hergestellte Normprüfkörper Wechselbiegefestigkeiten analog DIN 53442 von mehr als 1'000 000 Zyklen bei 23°C aufweisen.

2. Transparente, farblose, amorphe Polyamide oder deren Blends oder Legierungen gemäss Anspruch 1,
**dadurch gekennzeichnet, dass** aus ihnen hergestellte Normprüfkörper Wechselbiegefestigkeiten von mehr als 1'500'000 Zyklen bei 23°C aufweisen.

3. Transparente, farblose, amorphe Polyamide oder deren Blends oder Legierungen gemäss Anspruch 1,
**dadurch gekennzeichnet, dass** aus ihnen hergestellte Normprüfkörper Wechselbiegefestigkeiten von mehr als 1'900 000 Zyklen bei 23°C aufweisen.

4. Transparente, farblose, amorphe Polyamide oder deren Blends oder Legierungen gemäss Anspruch 1,
**dadurch gekennzeichnet, dass** die Decandisäure und/oder die Dodecandisäure durch maximal 10 Mol-% mindestens einer aromatischen Dicarbonsäure ersetzt sind.

5. Transparente, farblose, amorphe Polyamide oder deren Blends oder Legierungen gemäss Anspruch 1,
**dadurch gekennzeichnet, dass** mindestens eine Homopolyamid ausgewählt ist aus der Gruppe PA69, PA610, PA612, PA11, PA12, PA912, PA1212.

6. Transparente, farblose, amorphe Polyamide oder deren Blends oder Legierungen gemäss Anspruch 1,
**dadurch gekennzeichnet, dass** die Zusatzstoffe ausgewählt sind aus der Gruppe Gleitmittel, Hitzestabilisatoren, UV-Stabilisatoren, Kettenregler, Pigmente, Farbstoffe, Schlagzähmodifikatoren, Antiflammmittel, Verstärkungsstoffe und Füllstoffe.

7. Verwendung von transparenten, farblosen, amorphen Polyamiden oder deren Blends oder Legierungen mit mindestens einem Homopolyamid gemäss Anspruch 1 zur Herstellung von Formteilen mit hohen Wechselbiegefestigkeiten,
**dadurch gekennzeichnet, dass** die Polyamide
aus flüssigem 3,3' Dimethyl-4,4'-diaminodicyclohexylmethan mit einem Siedebereich bei 27 mbar von 204,5 bis 215,5°C nach DIN 53406,
einem Erstarrungsbereich von -7,1 bis -0,6°C nach ASTM D 1015-55,
und einer Dichte bei 20°C von ca. 0,943 bis 0,945 g/cm³
und Decandisäure oder Dodecandisäure oder deren Gemisch, welche durch maximal 20 Mol-% aromatische Dicarbonsäuren ersetzt sein können, aufgebaut sind,
wobei die relativen Lösungsviskositäten der Polyamide 0.5 %ig in m-Kresol über 1,7 und ihre T_{G} -Werte über 157°C liegen, die Polyamide oder deren Blends oder Legierungen wahlweise verarbeitungs- und/oder verwendungsbedingte Zusatzstoffe enthalten und aus ihnen hergestellte Normprüfkörper Wechselbiegefestigkeiten analog DIN 53442 von mehr als 1'000'000 Zyklen bei 23°C aufweisen.

## Claims

1. Transparent, colourless amorphous polyamides or blends or alloys thereof with at least one homopolyamide,
**characterised in that**
the polyamides are synthesised from
liquid 3,3' dimethyl-4,4'-diaminodicyclohexylmethan
with a boiling range at 27 mbar between 204,5 and 215,5°C in accordance with DIN 53406,
with a solidifying range between - 7,1 and - 0,6 °C in accordance with ASTM D 1015-55,
and a density at 20° C of about 0,943 to 0,945 g/cm³,
and decanedioic acid or dodecanediocic acid or mixtures thereof, which are sustainable by up to a maximum of 20 mole % of aromatic dicarboxylic acides, wherein
the relative viscosity of solution of the polyamides 0,5% in m-cresol are above 1,7,
the polyamides or the blends or alloys thereof have T_{G} values above 157° C, comprise additive substances alternately determined by their processing and/or use, and standard test specimens produced from them have fatigue strengths for completely reversed bending stress in analogy with DIN 53442 of more than 1'000'000 cycles at 23°C.

2. Transparent, colourless amorphous polyamides or blends or alloys thereof in accordance with claim 1,
**characterised in that**
standard test specimens produced from them have fatigue strengths for completely reversed bending stress of more than 1'500'000 Cycles at 23°C.

3. Transparent, colourless amorphous polyamides or blends or alloys thereof in accordance with claim 1,
**characterised in that**
standard test specimens produced from them have fatigue strengths for completely reversed bending stress of more than 1'900'000 cycles at 23°C.

4. Transparent, colourless amorphous polyamides or blends or alloys thereof in accordance with claim 1,
**characterised in that**
the decanedioxic acid and/or dodecanedioxic acid are sustained by up to a maximum of 10 mole % of a least one aromatic dicarboxylic acide.

5. Transparent, colourless amorphous polyamides or blends or alloys thereof in accordance with claim 1,
**characterised in that**
at least one homopolyamide is selected from the group comprising PA69, PA610, PA612, PA11, PA12,PA912, PA1212.

6. Transparent, colourless amorphous polyamides or blends or alloys thereof in accordance with claim 1,
**characterised in that**
the additive substances are selected from the group comprising lubricants, heat-stabilisers, UV-stabilisers, chain regulators, pigments, colorants, impact strength modifiers, flame retardants, reinforcing agents, and fillers.

7. Use of transparent, colourless amorphous polyamides or blends or alloys thereof with a least one homopolyamide in accordance with claim 1,
for making mouldings with high reversed bending stress strengths,
**characterised in that**
the polyamides are synthesised from
liquid 3,3' dimethy-4,4'diaminodicyclohexylmethan with
a boiling range at 27 mbar between 204,5 and 215,5 °C in accordance with DIN 53406, and
a solidifying range between - 7,1 and - 0,6 °C in accordance with ASTM D 1015-55, and
a density at 20 °C of about between 0,943 and 0,945 g/cm³
and decanedioic acid or dodecanediocic acid or mixtures thereof, which are sustainable by up to a maximum of 20 mole % of aromatic dicarboxylic acides, wherein
the relative viscosity of solution of the polyamides 0,5% in m-cresol are above 1,7 and their TG values are above 157 °C, the polyamides or the blends or alloys comprise alternately additive substances determined by their processing and/or use, and standard test specimens produced from them have fatigue strengths against reversed bending stress in analogy with DIN 53442 of more than 1'000'000 cycles at 23°C.

## Revendications

1. Polyamides amorphes, incolores, transparents ou leurs mélanges ou alliages avec au moins un homopolyamide,
**caractérisés en ce que** les polyamides sont préparés à partir de 3,3' dimethyl-4,4'-diaminodicyclohexylmethane liquide,
avec un intervalle d'ébullition à 27 mbar entre 204.5 et 215.5 °C selon DIN 53406,
un intervalle de solidification entre - 7,1 et - 0,6 °C selon ASTM D 1015-55, et une densité à 20°C entre environ 0,943 et 0,945 g/cm³, et
des diacides décanedioiques et dodécanedioiques et leurs mélanges, pouvant être substitués jusqu'à un maximum de 20% en mole par un acide aromatique dicarboxylique,
les viscosités relatives de solution des polyamides 0,5% dans m-crésol étant supérieures à 1,7,
les polyamides ou leurs mélanges ou alliages ayant des valeurs T_{G} supérieures à 157 °C et des échantillons conformes aux normes préparés à partir de ceux-ci présentent une résistance aux flexions alternées en analogie avec DIN 53442 de plus de 1'000'000 cycles à 23 °C.

2. Polyamides amorphes, incolores, transparents ou leurs mélanges ou alliages avec au moins une homopolyamide selon la revendication 1,
**caractérisés en ce que** les échantillons conformes aux normes préparés à partir de ceux-ci présentent une résistance aux flexions alternées de plus de 1'500'000 cycles à 23 °C.

3. Polyamides amorphes, incolores, transparents ou leurs mélanges ou alliages avec au moins un homopolyamide selon la revendication 1,
**caractérisés en ce que** les échantillons conformes aux normes préparés à partir de ceux-ci présentent une résistance aux flexions alternées de plus de 1'900'000 cycles à 23°C.

4. Polyamides amorphes, incolores, transparents ou leurs mélanges ou alliages avec au moins un homopolyamide selon la revendication 1,
**caractérisés en ce que** les diacides décanedioiques et dodécanedioiques sont substitués par un maximum des 10% en mole d'un acide aromatique dicarboxylique.

5. Polyamides amorphes, incolores, transparents ou leurs mélanges ou alliages avec au moins un homopolyamide selon la revendication 1,
**caractérisés en ce qu'**au moins un des homopolyamides est choisi dans le groupe constitué de PA69, PA610, PA12, PA11, PA12, PA912, PA1212.

6. Polyamides amorphes, incolores, transparents ou leurs mélanges ou alliages avec au moins un homopolyamide selon la revendication 1,
**caractérisés en ce qu'**au moins un des homopolyamides est choisi dans le groupe comprenant des lubrifiants, des stabilisateurs thermiques, des stabilisateurs UV, des agents de régulation de chaînes, des pigments, des colorants, des régulateurs de la résistance aux chocs, des inhibiteurs de flamme, des agents de renforcements et des charges.

7. Utilisation de polyamides amorphes, incolores, transparents ou leurs mélanges ou alliages avec au moins un homopolyamide selon la revendication 1 pour en produire des préformés présentant une haute résistance aux flexions alternées, **caractérisé en ce que** les polyamides sont préparés à partir de 3,3' dimethyl-4,4'-diaminodicyclohexylmethane liquide,
avec une rangé d'ébullition à 27 mbar entre 204.5 et 215.5 °C selon DIN 53406, une rangé de solidification entre - 7,1 et - 0,6 °C selon ASTM D 1015-55 et une densité à 20°C entre environ 0,943 et 0,945 g/cm³, et
des diacides décanedioiques et dodécanedioiques et leurs mélanges, pouvant être remplacés jusqu'à un maximum de 20% en mole par un acide aromatique dicarboxylique,
les viscosités relatives de solution des polyamides 0,5% dans m-crésol étant supérieures à 1,7 et leurs valeurs TG étant supérieures à 157 °C,
les polyamides ou leurs mélanges ou alliages comprenant alternativement des additives pour le besoin de la mise en oeuvre ou de l'utilisation ultérieure, et des échantillons conformes aux normes préparés à partir de ceux-ci présentent une résistance aux flexions alternées en analogie avec DIN 53442 de plus de 1'000'000 cycles à 23 °C.
